# EUROPEAN PATENT APPLICATION

(11) **EP 4 776 224 A1**
(43) Date of publication of application: **15.07.2026**
(21) Application number: 25305031.4
(22) Date of filing: 13.01.2025
(51) Int. Cl.: G06T 7/579

(54) **TEMPORALLY STABLE INITIALIZATION FOR THE GENERATION OF DYNAMIC 3D GAUSSIANS FROM MULTI-VIEW VIDEO CAPTURES**

(71) Applicant: InterDigital CE Patent Holdings, SAS, 75017 Paris (FR)
(72) Inventor: CHUPEAU, Bertrand, 35700 RENNES (FR); SANDRI, Gustavo, 35510 CESSON-SEVIGNE (FR); SABATER, Neus, 35830 BETTON (FR); THUDOR, Franck, 35000 RENNES (FR)
(74) Representative: Vossius & Partner Patentanwälte Rechtsanwälte mbB

(57) **Abstract**

Some embodiments of a method may include initializing a three-dimensional (3D) Gaussian (3DG) generation process, wherein initializing the 3DG generation process is based on two or more temporally consecutive frames with views of a 3D environment; and performing the 3DG generation process to generate a representation of the 3D environment.

## Description

### BACKGROUND

The present application is related to 3D Gaussians.

### SUMMARY

An example method in accordance with some embodiments may include: initializing a three-dimensional (3D) Gaussian (3DG) generation process, wherein initializing the 3DG generation process is based on two or more temporally consecutive frames with views of a 3D environment; and performing the 3DG generation process to generate a representation of the 3D environment.

For some embodiments of the example method, at least one of the two or more temporally consecutive frames includes two or more camera views of the 3D environment.

For some embodiments of the example method, initializing the 3DG generation process includes performing a Structure from Motion (SfM) process.

For some embodiments of the example method, initializing the 3DG generation process includes: obtaining two or more temporally consecutive frames with views of a 3D environment, wherein each of the temporally consecutive frames includes two or more camera views of the 3D environment captured by two or more respective cameras; passing the two or more temporally consecutive frames through a Structure from Motion (SfM) process; obtaining a sparse point cloud from the SfM process; and initializing the 3DG generation process with the sparse point cloud.

For some embodiments of the example method, initializing the 3DG generation process includes initializing the 3DG generation process using the obtained sparse point cloud for a point in time corresponding to each of the two or more temporally consecutive frames.

For some embodiments of the example method, the sparse point cloud obtained from the SfM process at a first point in time is used with obtaining a second sparse point cloud at a second point in time.

Some embodiments of the example method further include: initializing the three-dimensional (3D) Gaussian (3DG) generation process a second time, wherein initializing the 3DG generation process is based on the second sparse point cloud; and performing the 3DG generation process a second time to generate a second representation of the 3D environment.

Some embodiments of the example method further include: identifying one or more portions of the 3D environment with moving elements; identifying one or more remaining portions of the 3D environment as static elements; generating sparse point clouds independently for each of the one or more portions with moving elements and for each of the one or more remaining portions with static elements based on sets of temporally consecutive frames of varying length depending on whether the portion has moving or static elements; and recombining, for each frame, the sparse point clouds for each of the one or more portions with moving elements and the sparse point clouds for each of the one or more remaining portions with static elements to provide an initialization to the 3DG generation process.

For some embodiments of the example method, the 3DG generation process includes a projection process and an adaptive density control process.

For some embodiments of the example method, the 3DG generation process is an iterative process performed two or more times.

Some embodiments of the example method further include: selecting a subset of the two or more temporally consecutive frames, wherein initializing the 3DG generation process is based on the subset of the two or more temporally consecutive frames.

Some embodiments of the example method further include: selecting first and second subsets of the two or more temporally consecutive frames, wherein the first subset of the two or more temporally consecutive frames includes odd-numbered frames and the second subset of the two or more temporally consecutive frames includes even-numbered frames, and wherein initializing the 3DG generation process is based on alternating between the first and second subsets of the two or more temporally consecutive frames.

For some embodiments of the example method, the SfM process includes a key-point detection stage and a matching stage.

Some embodiments of the example method further include: selecting a subset of points from a plurality of points in each view of the two or more temporally consecutive frames detected by the key-point detection stage of the SfM process, wherein the matching stage of the SfM process is based on the subset of points selected from the plurality of points in each view of the two or more temporally consecutive frames.

An example apparatus in accordance with some embodiments may include: a processor; and a memory storing instructions operative, when executed by the processor, to cause the apparatus to perform the method of any one of claims 1 through 14.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a process diagram illustrating an example 3DG generation process according to some embodiments.
FIG. 3 is a schematic illustration showing an example configuration illustrating the Structure from Motion principle according to some embodiments.
FIG. 4 is a schematic illustration showing an example group of frames structure from motion process according to some embodiments.
FIG. 5 is a schematic illustration showing an example motion adaptive point cloud generation process according to some embodiments.
FIG. 6 is a flowchart illustrating an example process for generating a 3D scene representation according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

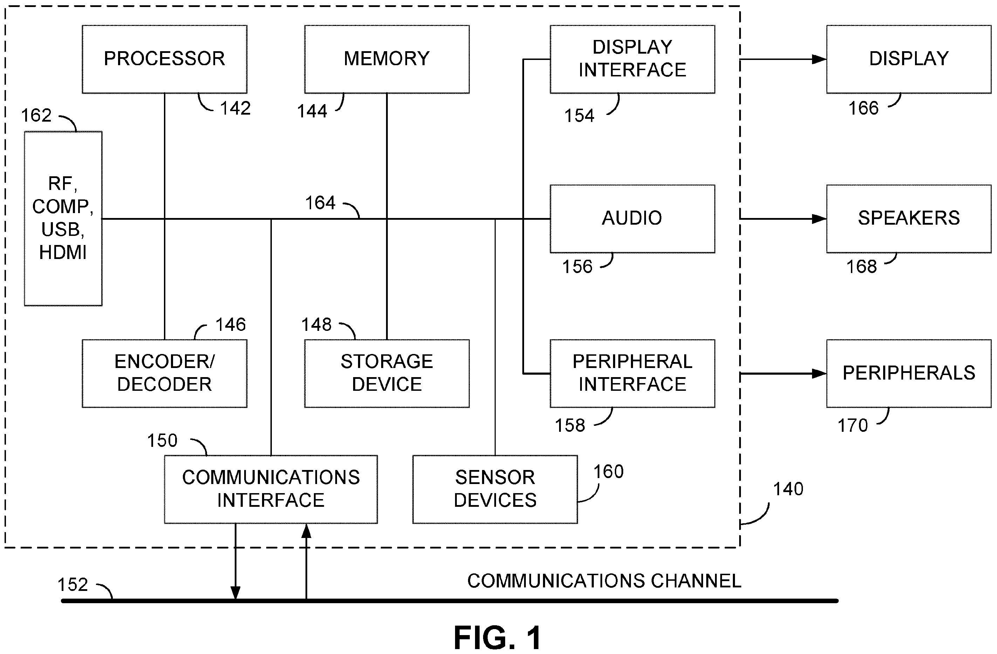

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

During the last year, different volumetric representations have been proposed to be used in the context of New View Generation (NVG). NVG generates new views from arbitrary viewing angles of a scene when only a limited number of input views have been captured. In particular, 3D Gaussian (3DG) splatting has emerged as a new scene representation that is able to realistically render volumetric data from a multi-view capture with high quality according to Kerbl, Bernhard, et al., 3D Gaussian Splatting for Real-Time Radiance Field Rendering, 42:4 ACM TRANS. GRAPH. 139-164 (2023) ("*Kerbl*").

Furthermore, 3DG splatting avoids unnecessary computation in the empty space and achieves real-time rendering and a fast training time. In fact, Gaussian splatting has already been used in the past in the computer graphics community but recently, with the advent of artificial intelligence and the arrival of very powerful GPUs, new learning techniques have become popular, creating a paradigm-shift in the realm of 3D scene representation.

*Kerbl* is understood to explain how to generate, in a reasonable time, a 3DG representation from a discrete set of views of the same static 3D scene, thus enabling high-quality fast rendering of virtual views. Since then, numerous papers have improved the original method and used this new scene representation into a variety of application domains.

However, modeling, with 3DGs, not a static 3D scene but a dynamic (time varying) 3D scene raises new problems. Generating a 3DG model independently for each individual frame (time sample) of the multi-view input video using the method from *Kerbl* or one of its variants is understood to lack enforcement of temporal consistency between temporally consecutive (one after another in time) sets of 3DG primitives. Such a method is understood to result in temporal instability artifacts in rendered sequences of virtual views (or pose traces).

To tackle this problem, some authors propose to add a temporal dimension to the 3DG primitives and to learn from the multi-view input videos so-called 4DGs, which are 3D Gaussian primitives extended over multiple consecutive frames according to Wu, Guanjun, et al., 4D Gaussian Splatting for Real-Time Dynamic Scene Rendering, PROC. OF THE IEEE/CVF CONF. ON COMP. VISION AND PATTERN RECOGNITION (CVPR) 20310-20320 (2024) ("*Wu*"). Such a 4DG approach involves more complex optimization methods to learn a 3D+t model with higher dimensionality.

The present application describes, for some embodiments, generation of sets of 3DG primitives for each individual frame of a multi-view input video, based on the method of *Kerbl,* while introducing temporal consistency constraints at the initialization stage to yield a temporally stable 3D model.

The present application describes a method to generate a temporally stable sparse point cloud from a multi-view video capture of a 3D scene. Coupled with isotropic 3D Gaussians centered at each of its points, such a sparse point cloud is used as initialization to the optimization method yielding a dynamic 3D Gaussian representation of the 3D scene.

The present application enables generation of a sparse point cloud consistent with the geometry of the dynamic 3D scene, which is temporally stable. In particular, this methodology allows initializing the generation of a 3D Gaussian scene representation with consistent data across frames, which yields a temporally stable 3DG model.

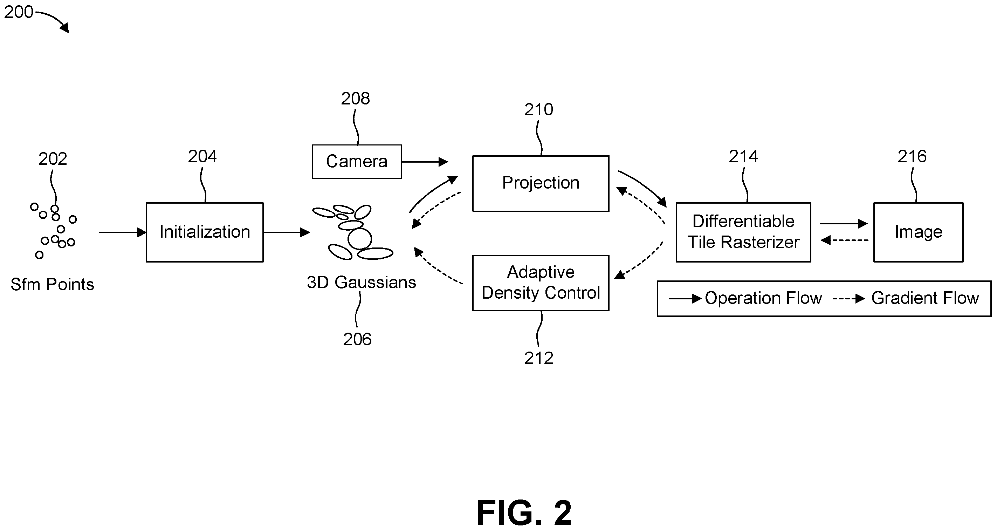

FIG. 2 is a process diagram illustrating an example 3DG generation process according to some embodiments. An example general pipeline (from *Kerbl*) for generating a 3D scene representation made of 3D Gaussian primitives is depicted in FIG. 2. The 3DG generation algorithm 200 takes as an input a sparse set of 3D points 202, associated with isotropic 3D Gaussians centered at each point. Starting from this initialization 204, an iterative optimization process learns a 3DG representation of the 3D scene from the input camera views 208.

The iterative optimization process is initialized with the sparse set of 3D points 202 to generate the initial 3D Gaussians 206. The 3D Gaussians 206 and camera parameters of the training input views 208 are inputted into a projection process 210. The output of the projection process 210 is inputted into a differentiable tile rasterizer 214. The differentiable tile rasterizer 214 outputs rendered images at training input views positions. The differences between rendered image and training input views are computed and the errors are propagated backward to the optimization process through a gradient flow. The adaptive density control 212 performs splitting and cloning operations and outputs a revised version of the 3D Gaussians 206. This revised version is updated in the opposite direction of the gradient (stochastic gradient descent algorithm) and inputted to a new iteration. This iterative optimization process repeats until the differences between rendered images and training views are within a threshold of a stop criteria. After the iterative optimization process is done the differentiable tile rasterizer 214 can output an image 216 at any virtual view position.

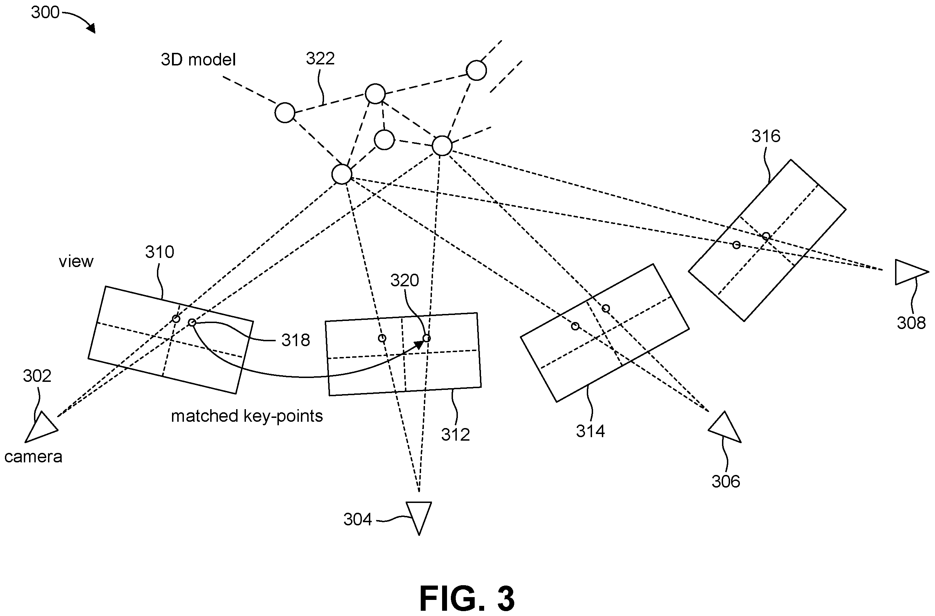

FIG. 3 is a schematic illustration showing an example configuration illustrating the Structure from Motion principle according to some embodiments. The optimization process described with regard to FIG. 2 may be initialized with a random set of points, but the convergence is greatly facilitated by starting with "real" 3D points attached to the geometry of the scene.

To achieve such a starting point, the example Structure from Motion (SfM) approach 300 illustrated in FIG. 3 may be used. An example SfM method may include the following steps: (i) detecting by a camera 302, 304, 306, 308 keypoints in each view 310, 312, 314, 316; (ii) matching keypoints 318, 320 (with similar features) across views 310, 312, 314, 316; and (iii) de-projecting 3D points from matches to generate a 3D model 322.

For some embodiments, the example SfM process of FIG. 3 may be done to generate the SfM points 202 of FIG. 2 that are the initialization inputs.

If the SfM process is applied independently for each frame of the multi-view sequence, there is no guarantee that the sparse point clouds will be temporally consistent. The present application discusses two use cases and two additional variant use cases to overcome this instability for some embodiments.

### Use Case 1

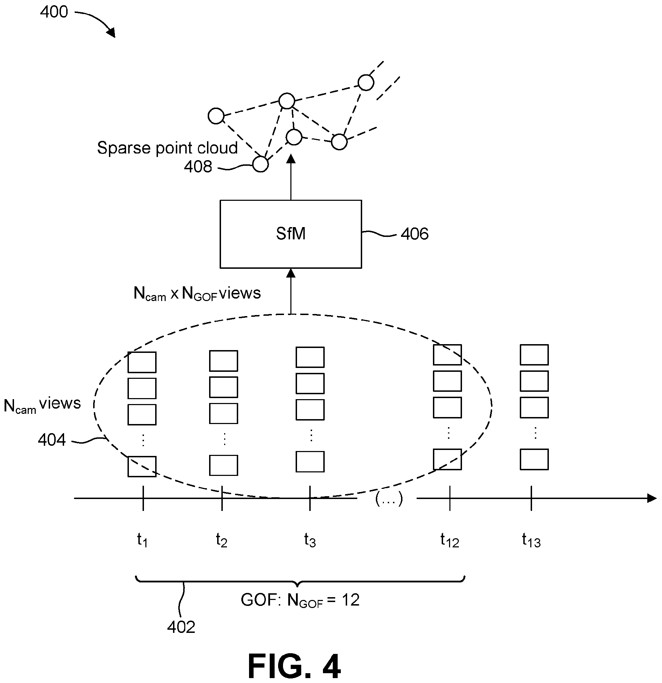

FIG. 4 is a schematic illustration showing an example group of frames structure from motion process according to some embodiments. In a first use case, a Structure from Motion (SfM) processing block 406 is inputted not only with the input views at a given time instant (individual frame) but with all input views 404 from consecutive frames in a Group of Frames (GOF) 402. Temporal (time-based) and spatial subsampling strategies are described to decrease the computational demand. Adaptation to the scene dynamics with different processing of static and moving parts is also described.

All views from groups of (temporally consecutive) frames (GOF) are inputted to the SfM processing block 406, instead of a single frame. The same achieved sparse point cloud 408 is used for the entire GOF 402 to initialize the 3D Gaussian generation process. FIG. 4 illustrates an example process 400 with a GOF 402 of 12 frames. Thus, (12×N_{cam}) views 404 are inputted to the SfM block 406 if there are N_{cam} different cameras capturing the 3D scene.

To decrease the computational demand, various subsampling strategies are applied for some embodiments. For some embodiments, only a subset of frames in the GOF may be used with regular subsampling (e.g., every two frames). For some embodiments, only a subset of input views, among N_{cam}, may be used (e.g., half of the input views, with odd views on frame tₙ and even views on the next frame tₙ₊₁ (or vice versa)). For some embodiments, only a subset of key-points extracted by SfM on each view are input to the key-point matching within the SfM process.

### Use Case 2: Motion Adaptive Variant

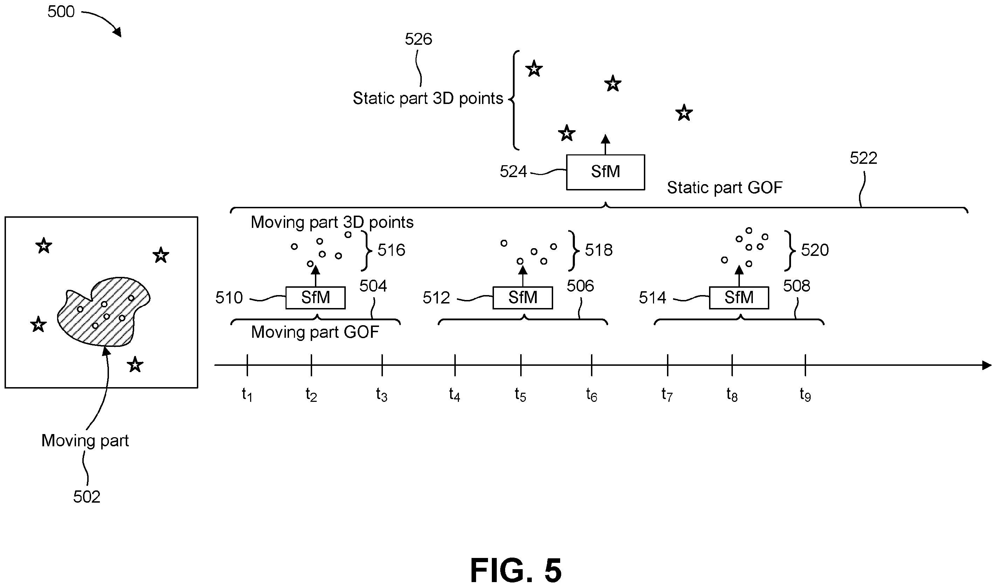

FIG. 5 is a schematic illustration showing an example motion adaptive point cloud generation process according to some embodiments. In scene parts with moving objects, the sparse point cloud issued from SfM may be refreshed more often than in static parts to accurately represent the "true" geometry. So, for some embodiments, a motion detection mask may be computed on all views to determine static vs. moving parts. Two separate SfM processes may be applied. A first SfM process may be applied to the static part(s) of the 3D scene, and a second SfM process may be application for the moving part(s) of the 3D scene. Shorter GOFs may be used for the moving parts of the 3D scene.

FIG. 5 shows an example process 500 with example short GOFs 504, 506, 508 (of 3 frames) for a moving part 502 of the 3D scene. A first group of frames 504 covering times *t*₁, *t*₂, and *t*₃ are inputted into a first SfM process block 510 to generate a first set of 3D points 516 for a moving part of the 3D scene. A second group of frames 506 covering times *t*₄, *t*₅, and *t*₆ are inputted into a second SfM process block 512 to generate a second set of 3D points 518 for a moving part of the 3D scene. A third group of frames 508 covering times *t*₇, *t*₈, and *t*₉ are inputted into a third SfM process block 514 to generate a third set of 3D points 520 for a moving part of the 3D scene.

The example process 500 also shows a longer GOF 522 equal to the entire sequence for the static part of the 3D scene. The longer GOF 522 covers frames at times *t*₁ to *t*₉. The frames at times *t*₁ to *t*₉ are inputted into an SfM process 524, which generates 3D points 526 for a static part of the 3D scene.

For each frame, the points coming from the static part pipeline and the moving part pipeline are recombined to generate the outputted sparse point cloud.

### Use Case 3

In a third use case, the sparse initialization point cloud generated at time t is used to generate the sparse initialization at time t+1 for the duration of the GOF. In other words, the sparse initialization point cloud generated by SfM on the first frame of the GOF is reused on all subsequent frames of the GOF for some embodiments.

### Use Case 4

A fourth use case may occur by applying a motion adaptive variant to the third use case for some embodiments.

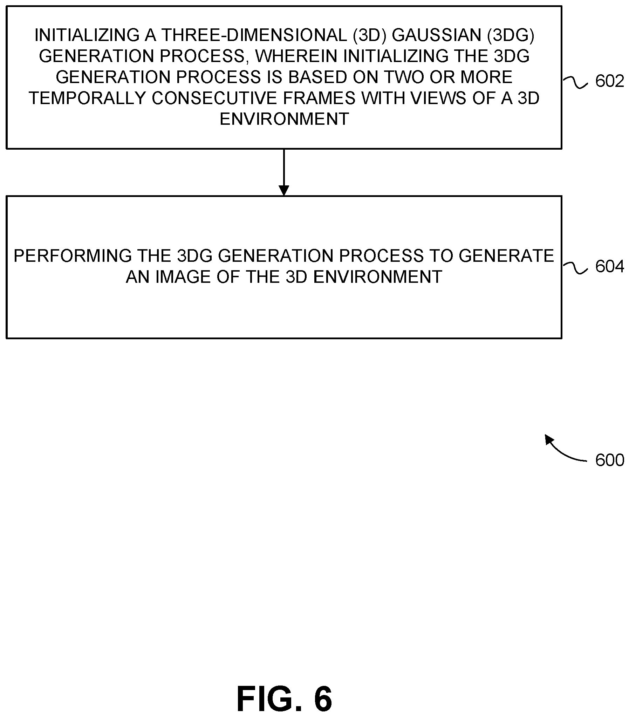

FIG. 6 is a flowchart illustrating an example process for generating a 3D scene representation according to some embodiments. For some embodiments, an example process 600 may include initializing 602 a three-dimensional (3D) Gaussian (3DG) generation process, wherein initializing the 3DG generation process is based on two or more temporally consecutive frames with views of a 3D environment. For some embodiments, the example process 600 may further include performing 604 the 3DG generation process to generate a representation of the 3D environment.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: initializing a three-dimensional (3D) Gaussian (3DG) generation process, wherein initializing the 3DG generation process is based on two or more temporally consecutive frames with views of a 3D environment; and performing the 3DG generation process to generate a representation of the 3D environment.

For some embodiments of the example method, at least one of the two or more temporally consecutive frames includes two or more camera views of the 3D environment.

For some embodiments of the example method, initializing the 3DG generation process includes performing a Structure from Motion (SfM) process.

For some embodiments of the example method, initializing the 3DG generation process includes: obtaining two or more temporally consecutive frames with views of a 3D environment, wherein each of the temporally consecutive frames includes two or more camera views of the 3D environment captured by two or more respective cameras; passing the two or more temporally consecutive frames through a Structure from Motion (SfM) process; obtaining a sparse point cloud from the SfM process; and initializing the 3DG generation process with the sparse point cloud.

For some embodiments of the example method, initializing the 3DG generation process includes initializing the 3DG generation process using the obtained sparse point cloud for a point in time corresponding to each of the two or more temporally consecutive frames.

For some embodiments of the example method, the sparse point cloud obtained from the SfM process at a first point in time is used with obtaining a second sparse point cloud at a second point in time.

Some embodiments of the example method further include: initializing the three-dimensional (3D) Gaussian (3DG) generation process a second time, wherein initializing the 3DG generation process is based on the second sparse point cloud; and performing the 3DG generation process a second time to generate a second representation of the 3D environment.

Some embodiments of the example method further include: identifying one or more portions of the 3D environment with moving elements; identifying one or more remaining portions of the 3D environment as static elements; generating sparse point clouds independently for each of the one or more portions with moving elements and for each of the one or more remaining portions with static elements based on sets of temporally consecutive frames of varying length depending on whether the portion has moving or static elements; and recombining, for each frame, the sparse point clouds for each of the one or more portions with moving elements and the sparse point clouds for each of the one or more remaining portions with static elements to provide an initialization to the 3DG generation process.

For some embodiments of the example method, the 3DG generation process includes a projection process and an adaptive density control process.

For some embodiments of the example method, the 3DG generation process is an iterative process performed two or more times.

Some embodiments of the example method further include: selecting a subset of the two or more temporally consecutive frames, wherein initializing the 3DG generation process is based on the subset of the two or more temporally consecutive frames.

Some embodiments of the example method further include: selecting first and second subsets of the two or more temporally consecutive frames, wherein the first subset of the two or more temporally consecutive frames includes odd-numbered frames and the second subset of the two or more temporally consecutive frames includes even-numbered frames, and wherein initializing the 3DG generation process is based on alternating between the first and second subsets of the two or more temporally consecutive frames.

For some embodiments of the example method, the SfM process includes a key-point detection stage and a matching stage.

Some embodiments of the example method further include: selecting a subset of points from a plurality of points in each view of the two or more temporally consecutive frames detected by the key-point detection stage of the SfM process, wherein the matching stage of the SfM process is based on the subset of points selected from the plurality of points in each view of the two or more temporally consecutive frames.

An example apparatus in accordance with some embodiments may include: a processor; and a memory storing instructions operative, when executed by the processor, to cause the apparatus to perform the method of any one of claims 1 through 14.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
initializing a three-dimensional (3D) Gaussian (3DG) generation process,
wherein initializing the 3DG generation process is based on two or more temporally consecutive frames with views of a 3D environment; and
performing the 3DG generation process to generate a representation of the 3D environment.

2. The method of claim 1, wherein at least one of the two or more temporally consecutive frames comprises two or more camera views of the 3D environment.

3. The method of any one of claims 1-2, wherein initializing the 3DG generation process comprises performing a Structure from Motion (SfM) process.

4. The method of any one of claims 1-3, wherein initializing the 3DG generation process comprises:
obtaining two or more temporally consecutive frames with views of a 3D environment,
wherein each of the temporally consecutive frames comprises two or more camera views of the 3D environment captured by two or more respective cameras;
passing the two or more temporally consecutive frames through a Structure from Motion (SfM) process;
obtaining a sparse point cloud from the SfM process; and
initializing the 3DG generation process with the sparse point cloud.

5. The method of claim 4, wherein initializing the 3DG generation process comprises initializing the 3DG generation process using the obtained sparse point cloud for a point in time corresponding to each of the two or more temporally consecutive frames.

6. The method of any one of claims 4-5, wherein the sparse point cloud obtained from the SfM process at a first point in time is used with obtaining a second sparse point cloud at a second point in time.

7. The method of claim 6, further comprising:
initializing the three-dimensional (3D) Gaussian (3DG) generation process a second time,
wherein initializing the 3DG generation process is based on the second sparse point cloud; and
performing the 3DG generation process a second time to generate a second representation of the 3D environment.

8. The method of any one of claims 1-7, further comprising:
identifying one or more portions of the 3D environment with moving elements;
identifying one or more remaining portions of the 3D environment as static elements;
generating sparse point clouds independently for each of the one or more portions with moving elements and for each of the one or more remaining portions with static elements based on sets of temporally consecutive frames of varying length depending on whether the portion has moving or static elements; and
recombining, for each frame, the sparse point clouds for each of the one or more portions with moving elements and the sparse point clouds for each of the one or more remaining portions with static elements to provide an initialization to the 3DG generation process.

9. The method of any one of claims 1-8, wherein the 3DG generation process comprises a projection process and an adaptive density control process.

10. The method of any one of claims 1-9, wherein the 3DG generation process is an iterative process performed two or more times.

11. The method of any one of claims 1-10, further comprising:
selecting a subset of the two or more temporally consecutive frames,
wherein initializing the 3DG generation process is based on the subset of the two or more temporally consecutive frames.

12. The method of any one of claims 1-10, further comprising:
selecting first and second subsets of the two or more temporally consecutive frames,
wherein the first subset of the two or more temporally consecutive frames comprises odd-numbered frames and the second subset of the two or more temporally consecutive frames comprises even-numbered frames, and
wherein initializing the 3DG generation process is based on alternating between the first and second subsets of the two or more temporally consecutive frames.

13. The method of any one of claims 1-12, wherein the SfM process comprises a key-point detection stage and a matching stage.

14. The method of claim 13, further comprising:
selecting a subset of points from a plurality of points in each view of the two or more temporally consecutive frames detected by the key-point detection stage of the SfM process,
wherein the matching stage of the SfM process is based on the subset of points selected from the plurality of points in each view of the two or more temporally consecutive frames.

15. An apparatus comprising:
a processor; and
a memory storing instructions operative, when executed by the processor, to cause the apparatus to perform the method of any one of claims 1 through 14.
